Europäisches Patentamt

European Patent Office

Office européen des brevets

(11) Publication number: **0 260 865**
**A1**

## (12) EUROPEAN PATENT APPLICATION

(21) Application number: **87307937.0**

(22) Date of filing: **08.09.87**

(51) Int. Cl.⁴: **C04B 35/58 , C04B 35/64**

(30) Priority: **18.09.86 JP 220317/86**

(43) Date of publication of application:
**23.03.88 Bulletin 88/12**

(84) Designated Contracting States:
**DE FR GB IT NL**

(71) Applicant: **SUMITOMO CHEMICAL COMPANY, LIMITED**
**15 Kitahama 5-chome Higashi-ku**
**Osaka-shi Osaka 541(JP)**

(72) Inventor: **Nakano, Kazuhiko**
**3-1-34, Kouzu**
**Katano-shi Osaka(JP)**
Inventor: **Tanaka, Shinichiro**
**1-2-40, Hirata**
**Ibaraki-shi Osaka(JP)**
Inventor: **Tamura, Yasuaki**
**20-1, Hoshigoe-cho**
**Niihama-shi Ehime(JP)**

(74) Representative: **Diamond, Bryan Clive et al**
**Gee & Co. Chancery House Chancery Lane**
**London WC2A 1QU(GB)**

(54) **Process for preparation of aluminium nitride sintered material.**

(57) A process for preparation of an aluminium nitride sintered article comprises adding calcium cyanamide in amount of 0.01 - 4 wt% as a sintering aid to aluminium nitride powder and optionally adding a binder and, after mixing and molding, sintering the green body in non-oxidative atmosphere, e.g. nitrogen, at 1,700 - 2000°C for pressureless sintering or 1,600 to 2000°C for hot-press sintering.

The aluminium nitride sintered articles have high thermal conductivity and high bending strength, and high thermal conductivity and are useful as electrically insulating substrates in an IC or LSI, dissipating plates in thyristors or transistors and crucibles for vacuum evaporation.

EP 0 260 865 A1

# PROCESS FOR PREPARATION OF ALUMINUM NITRIDE SINTERED MATERIAL

This invention relates to a process for preparation of an aluminum nitride sintered material having high thermal conductivity.

Recently, with the increasing integration and output power of semiconductor microdevices, the amount of heat evolved per unit area of a silicon device has become much increased. An electrically insulating substrate material having high thermal conductivity is required in order to rapidly dissipate such heat.

In particular, since aluminum nitride sintered materials are known to have high thermal conductivity, high mechanical strength, and good electrically insulating property, they are now considered to be very suitable as a material best adapted for heat dissipation.

In order to obtain aluminum nitride sintered materials having high thermal conductivity, it is necessary to mold an aluminum nitride powder and sinter it to a dense body. Since aluminum nitride can hardly be sintered alone, it has heretofore been attempted to obtain a dense sintered material by not only the hot-press process but also by the pressureless sintering process by adding oxides such as CaO, BaO or $Y_2O_3$, as a sintering aid.

For instance, in Japanese Patent Publication No. 49510/83, there has been proposed a process wherein a dense aluminum nitride sintered material having relative density of 98.5% or higher is obtained by sintering with the use of CaO, BaO, SrO, etc. as a sintering aid. Also, in Japanese Patent Application (OPI) No. 50077/84 (the term "OPI" as used herein means an unexamined published Japanese patent application), it has been described that an aluminum nitride sintered material having thermal conductivity of from 55 to 72 W/m°K is obtained when CaO, BaO, SrO, etc. is added as a sintering aid and sintered by the hot-press process.

As described above, although by the addition of oxides, dense aluminum nitride sintered materials can be obtained, their thermal conductivities are considerably low as compared with the value obtained with a single crystal of aluminum nitride, 320 W/m°K, so that this may not as yet be sufficient.

On the other hand, in Japanese Patent Application (OPI) No. 151280/85, it has been proposed to add acetylides of Ca, Sr, etc. in sintering in order to improve the thermal conductivity, and it has been disclosed that when $CaC_2$ is added, an aluminum nitride sintered material having a high thermal conductivity of 140 W/m°K is obtained. In this process, however, for use of acetylide compounds which are liable to violently react with oxygen and water, there have been a number of serious problems in the method of addition and the powder treating steps such as drying, molding, etc.

The object of this invention is to provide a process wherein a dense aluminum nitride sintered material having high thermal conductivity and high strength can be produced by the use of a compound comparatively easy to handle as a sintering aid.

Thus, the invention provides a process for preparation of an aluminum nitride sintered material comprising adding calcium cyanamide as a sintering aid to aluminum nitride powder and, after mixing and molding, sintering the green body in a non-oxidative atmosphere.

The aluminum nitride powder used in this invention is preferably as high as possible in purity and as fine as possible in size, although there is no particular restriction on the process for preparation thereof. Those containing 32 wt% or more of nitrogen and 2 wt% or less of oxygen and having an average particle diameter of 2 μm or less are especially preferable.

Calcium cyanamide ($CaCN_2$) used as a sintering aid can be any of the products synthesized by reacting calcium carbonate or calcium oxide with ammonia and carbon monoxide, those synthesized by reacting dicyandiamide with calcium oxide, and so-called lime nitrogen synthesized by reacting calcium carbide and nitrogen. Of the above-described syntheses, the former two can produce highly pure products. In contrast, though the so-called lime nitrogen obtained by the latter contains carbon as an impurity, such carbon can be expected to reduce oxides contained in the starting aluminum nitride powder and to remove oxygen from the aluminum nitride particles.

The amount of the calcium cyanamide to be added is preferably within a range of from 0.01 to 4 wt% as calculated in terms of the weight of calcium element on the basis of the weight of aluminum nitride. Especially within such a range, a dense aluminum nitride sintered material having high thermal conductivity and high bending strength can be obtained.

Since calcium cyanamide readily decomposes into ammonia and calcium carbonate in hot water, its mixing with an aluminum nitride powder preferably requires either dry mixing or wet mixing using non-aqueous solvents such as alcohols. In the above case, in order to facilitate the subsequent molding step, known binders such as, for example, polyvinyl butyral, polyvinyl alcohol or a polyacrylic acid ester are usually added. In addition, the resulting mixture is prepared in the form of dry blended powders, granules, kneaded mixtures, slurries, etc. in response to the molding process to be performed in the subsequent step.

As the molding process, one can adopt conventional processes, i.e., dry processes such as uniaxial pressing, rubber pressing or wet processes such as a doctor blade process or extrusion process, etc. Also, it is possible to adopt the hot-press process in which molding and sintering are carried out simultaneously.

In order to prevent the oxidation of aluminum nitride at the time of sintering, it is necessary to carry out the sintering in a non-oxidative atmosphere. As the non-oxidative atmosphere, nitrogen, argon, a mixed gas of nitrogen and hydrogen, a mixed gas of nitrogen and argon, or a vacuum can be employed, but a nitrogen atmosphere is most preferable from the viewpoints of the cost of production, the ease of handling of apparatus, etc. Also, in the pressureless sintering process, in order to prevent the vaporization of the aluminum nitride at the time of sintering, the powder-bed process in which molded articles are embedded in powders composed mainly of aluminum nitride is preferred.

The sintering temperature is suitable from 1,700 to 2,000°C in the case of pressureless sintering, but in the case of sintering under pressure such as the hot-press process, it may be from 1,600 to 2,000°C.

In accordance with this invention, there can be obtained aluminum nitride sintered materials having high thermal conductivity and high bending strength, which have wide application to various uses such as high thermal conductive, electrically insulating substrates in an IC or LSI; dissipating plates in thyristors or transistors and crucibles for vacuum evaporation.

This invention will be more fully explained below with reference to the following examples.

In the following examples, the density was measured by the Archimedes' method, the thermal conductivity was measured by the laser flash method, and the bending strength was measured according to the 3-point bending test method as described in JIS R-1601.

Example

To an aluminum nitride fine powder having an average particle diameter of 0.7 μm and oxygen content of 1.5% was added calcium cyanamide in an amount shown in Table 1 as calculated in terms of the weight of calcium element, and using isopropyl alcohol as a dispersion medium, mixing was effected for 15 hours with alumina balls under a nitrogen gas atmosphere. After drying, coarse particles of 80μm or larger were removed by sieving to prepare a starting material for sintering.

The starting material was subjected to uniaxial pressing under a pressure of 300 kg/cm² and then to rubber pressing under a pressure of 2,000 kg/cm² to give a molded article. The molded article was embedded in a mixed powder of aluminum nitride powder and boron nitride powder (mixing ratio: 50/50) and sintered at 1,850°C for 3 hours in a nitrogen gas atmosphere to produce an aluminum nitride sintered material.

The density, the bending strength, and the thermal conductivity of the sintered material thus obtained are shown in Table 1 together with the amount of calcium cyanamide added as calculated in terms of the weight of calcium element.

The obtained aluminum nitride sintered material had a yellowish white color, appeared translucent, and when it was cut into an about 0.5 mm thick plate, its light transmittance was such that by polishing the surface, letters could be read therethrough.

Table 1

| Amount of CaCN$_2$ added (as calculated in terms of the weight of Ca element) (wt%) | Density of sintered material (g/cm$^3$) | 3-Point bending strength (kg/mm$^2$) | Thermal conductivity (W/m°K) |
|---|---|---|---|
| 0.01 | 3.25 | 41 | 140 |
| 0.05 | 3.25 | 45 | 150 |
| 0.1 | 3.26 | 44 | 150 |
| 0.5 | 3.26 | 44 | 170 |
| 1.0 | 3.26 | 40 | 180 |
| 4.0 | 3.25 | 38 | 140 |

Comparative Example

Sintering was carried out in the same manner as in the Example except that to the aluminum nitride powder was added calcium oxide in the amount shown in Table 2 in place of the calcium cyanamide.

The density, the bending strength, and the thermal conductivity of the sintered material thus obtained are shown in Table 2 together with the amount of calcium oxide added as calculated in terms of the weight of calcium element.

The obtained aluminum nitride sintered material had a yellowish white color, appearing translucent to an extent similar to that in the Example.

Table 2

| Amount of CaO added (as calculated in terms of the weight of Ca element) (wt%) | Density of sintered material (g/cm$^3$) | 3-Point bending strength (kg/mm$^2$) | Thermal conductivity (W/m°K) |
|---|---|---|---|
| 0.1 | 3.24 | 38 | 80 |
| 0.5 | 3.26 | 40 | 100 |
| 1.0 | 3.26 | 39 | 110 |
| 2.0 | 3.25 | 41 | 100 |

## Claims

1. A process for preparing a sintered shaped article of aluminium nitride by mixing an alkali metal compound as sintering aid with powdered aluminium nitride, molding the mixture shape and sintering it; characterised in that the sintering aid is calcium cyanamide and that the sintering is in a non-oxidative atmosphere.

2. A process as claimed in Claim 1, wherein the calcium cyanamide is added in the amount of from 0.01 to 4 wt% of calcium element per weight of aluminium nitride.

3. A process as in Claim 1 or 2, wherein said aluminium nitride has a nitrogen content of 32 wt% of more, an oxygen content of 2 wt% or less, and an average particle diameter of $\mu$m or less.

4. A process as claimed in Claim 1, 2 or 3, wherein the sintering is carried out in a nitrogen gas atmosphere.

5. A process as claimed in any of Claims 1 to 4, wherein the sintering is carried out by the pressureless sintering process.

6. A process as claimed in Claim 5, wherein the sintering is carried out at temperature of from 1,700 to 2,000°C.

7. A process as claimed in any of Claims 1 to 4, wherein the sintering is carried out by the hot-press process.

8. A process as claimed in Claim 7, wherein the sintering is carried out at a temperature of from 1,600 to 2,000°C.

9. A shaped article made by a process as claimed in any preceding claim.

| | DOCUMENTS CONSIDERED TO BE RELEVANT | | EP 87307937.0 | |
|---|---|---|---|---|
| Category | Citation of document with indication, where appropriate, of relevant passages | Relevant to claim | CLASSIFICATION OF THE APPLICATION (Int. Cl.4) | |
| P,X | JP - A - 62-187 171 (ONODA CEMENT KK) <br> * Totality * <br> -- <br> JP - A - 61-146 768 (TDK CORPORA-TION) <br> * Totality * | 1-9 | C 04 B 35/58 <br> C 04 B 35/64 | |
| A | | 1,2 | | |
| X | ---- | 3,4,7-9 | | |

| | | TECHNICAL FIELDS SEARCHED (Int. Cl.4) |
|---|---|---|
| | | C 04 B |

The present search report has been drawn up for all claims

| Place of search | Date of completion of the search | Examiner |
|---|---|---|
| VIENNA | 14-12-1987 | BECK |